# EUROPEAN PATENT APPLICATION

(11) **EP 1 848 215 A2**
(43) Date of publication of application: **24.10.2007**
(21) Application number: 07006922.4
(22) Date of filing: 03.04.2007
(51) Int. Cl.: H04N 7/173

(54) **Device and method for editing channel list of digital broadcasting service**

(30) Priority: 18.04.2006 KR 20060035120
(71) Applicant: Samsung Electronics Co., Ltd., Suwon-si, Gyeonggi-Do (KR)
(72) Inventor: Kim, Kang Wook, Suwon-si Gyeonggi-do (KR); Son, Jae Gon, Suwon-si Gyeonggi-do (KR); Kim, Soon Jin, Suwon-si Gyeonggi-do (KR)
(74) Representative: Lang, Johannes

(57) **Abstract**

A device and method for editing a channel list of a digital broadcasting system includes a channel list editing method for presenting the channel list if an edit function is requested, extracting an editing format from the edit request, reordering the channel items according to the editing format, and re-presenting the channel list having reordered channel items. The channel list editing device and method of the present invention allow the user to edit the channel list, resulting in better functionality. Furthermore, this invention includes mapping alphanumeric data, registering the data to corresponding virtual channel and sorting on the basis of the virtual channel names.

## Description

### BACKGROUND OF THE INVENTION

### 1. Field of the Invention

The present invention relates to a digital broadcasting system and, in particular, to a device and method for editing a channel list of a digital broadcasting system.

### 2. Description of the Related Art

Digital broadcasting is the practice of using digital data rather than analog waveforms to carry broadcasts over television channels or assigned radio frequency bands. It is becoming increasingly popular in transmission medium such as television but is being adapted at a slower rate in medium such as radio.

As the strong synergies between mobile technologies and broadcast technologies become increasingly clear, the telecom broadcasting industries are aligning to take full advantage of the wealth of opportunities opened up by this new marriage multimedia contents delivery services have become available widely and on-demand.

Digital multimedia broadcasting (DMB) is a digital transmission system for delivery of multimedia contents and services on the move. DMB is based on the Digital Audio Broadcasting (DAB) standard, which is modified for transmitting digital audio, video, and multimedia streaming for mobile DMB receivers. DMB enables people on the road to enjoy crystal-clear video, CD quality of audio, and data via DMB exclusive terminals or hand-held devices such as mobile telephones. DMB services can be provided with plural video and audio channels and be received by the DMB receivers having non-directional antennas.

There are two types of DMB: Terrestrial DMB (T-DMB) and Satellite DMB (S-DMB). Both T-DMB and S-DMB are roughly equal in terms of their mobile reception of multimedia broadcasts. The difference between them is that T-DMB works on networks built only through terrestrial broadcast stations, while S-DMB utilizes networks built with satellites and gap Fillers, which provide in-building coverage.

Table 1 shows comparison between the conventional broadcasting system and DMB system.

| | Mobility | | Comparison |
|---|---|---|---|
| | Non-support | Support | |
| Transmission | Terrestrial broadcasting | T-DMB | Broadcast station |
| | Satellite broadcasting | S-DMB | Satellite |
| Receiver | Large | Very small | |

Typically, the DMB terminal is smaller than the conventional TV receiver. T-DMB works on networks built only through terrestrial broadcast stations, while S-DMB utilizes networks built with satellites and gap Fillers for securing in-building coverage.

S-DMB incorporates a high power geostationary satellite for outdoor coverage integrated with a terrestrial repeater (low power gap-filler) network for indoor coverage in urban areas.

In the meantime, T-DMB utilizes the terrestrial broadcast stations such as base stations of a cellular communication system.

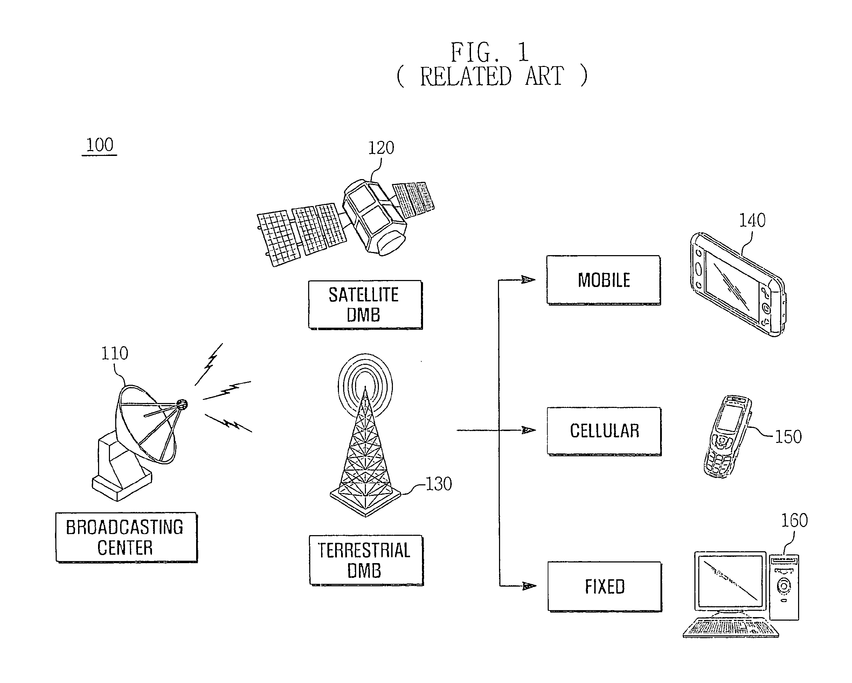

FIG. 1 is a schematic block diagram illustrating a typical S-DMB system.

Referring to FIG. 1, the S-DMB system (100) includes a broadcasting center 110, a satellite 120, a terrestrial repeater 130, and DMB receivers 140, 150, and 160 such as an in-car terminal, a mobile handset, and a personal computer equipped with DMB receiver module.

The satellite 120 is connected to the broadcasting center 110 so as to receive multimedia-broadcasting data. Upon receiving the multimedia data, the broadcasting center 110 compresses multimedia data in a predetermined format and transmits the compressed data to the satellite 120 and the terrestrial repeater 130. Upon receiving the compressed data, the satellite 120 and the terrestrial repeater 130 amplify and then multicast or broadcast the multimedia data such that the DMB receivers 140, 150, and 160 receive the multimedia data. Each DMB receiver receives the multimedia data from the satellite 120 and/or the terrestrial repeater 130. Once the multimedia data are received, the DMB receiver performs decompression, demodulation, and decoding on the received multimedia data so as to recover the original multimedia data.

Even though the conventional DMB system takes advantages of high quality video and audio and supports mobility, for user's convenience and enjoyment the system is yet to reach its full potential.

Regarding a user's convenience, the conventional DMB receiver provides a channel list such that a user may search channels and programs by referring to the channel list.

Typically, the channel list consists of channel items of which titles differ from those of corresponding public channel items, even though the same contents are broadcasted through both DMB channel and public channel by a same broadcasting station.

However, the conventional DMB receiver provides the channel list presenting the titles of the DMB channels such that a user feels unfamiliar with the DMB channels, resulting in inconvenience during a channel and program search.

### SUMMARY OF THE INVENTION

The present invention solves the above problems, and it is further an aspect of the present invention to provide a device and method for editing a channel list of digital broadcasting service, and information on channels of the channel list.

It is another aspect of the present invention to provide a device and method for editing a channel list of digital broadcasting service, which is capable of customizing a channel list for user's convenience.

It is yet another aspect of the present invention to provide a device and method for editing a channel list of digital broadcasting service, capable of channels familiarization by allowing a user to change information on the channels.

In accordance with one aspect of the present invention, the above and other objects are accomplished by a method for editing a channel list having a plurality of channel items. The method for editing a channel list includes presenting the channel list if an edit request is input, extracting an editing format from the edit request, reordering the channel items according to the editing format, and representing the channel list having reordered channel items.

In accordance with another aspect of the present invention, the above and other objects are accomplished by a device for editing a channel list having a plurality of channel items provided for a digital broadcasting service. The device includes a memory for storing applications supporting the digital broadcasting service and editing the channel list, data generated during operations of the applications, and a channel list and parameters and settings associated with the application for editing channel list; a controller for controlling the operations of the applications and presentations of the channel list and status of editing channel list; and a multimedia module for providing editing formats for reordering the channel items of the channel list.

In accordance with another aspect of the present invention, a device for receiving digital broadcasting accomplishes the above and other objects. The device includes a demultiplexer for de-multiplexing received transmission packets into data packets and control packets; a channel parser for parsing the control packets to obtaining the channel list; a storage unit for storing the channel list; and a channel configuration unit for loading the channel list from the storage unit and modifying the channel list according to an editing format requested by a user.

### BRIEF DESCRIPTION OF THE DRAWINGS

The above and other objects, features and advantages of the present invention will be more apparent from the following detailed description in conjunction with the accompanying drawings, in which:
FIG. 1 is a schematic block diagram illustrating a typical S-DMB system; FIG. 2 is a block diagram illustrating a portable terminal according to the present invention;
FIG. 3 is a block diagram illustrating a multimedia module of FIG. 2 in more detail;
FIG. 4 is a flowchart illustrating a method for editing channel list of a digital broadcasting service according to the present invention;
FIG. 5 is a flowchart illustrating a channel list reordering procedure with a frequency based reordering format according to the present invention;
FIGs. 6A to 6B are flowcharts illustrating a channel list reordering procedure with a user selective order format according to an embodiment of the present invention;
FIG. 7 shows example screen images for explaining a user selective order format-based channel list reordering procedure of FIGs. 6A to 6B;
FIG. 8 is a flowchart illustrating a channel list reordering procedure with a favorite channel reordering format according to the present invention; and
FIG. 9 is a flowchart illustrating a channel list reordering procedure with a favorite channel reordering format according to the present invention.

FIG. 10 is a flowchart illustrating a channel list reordering procedure with a keyword-based reordering format according the present invention.

### DETAILED DESCRIPTION OF PREFERRED EMBODIMENTS

Preferred embodiments of the present invention are described with reference to the accompanying drawings in detail. The same reference numbers are used throughout the drawings to refer to the same or like parts. Detailed descriptions of well-known functions and structures incorporated herein are omitted to avoid obscuring the subject matter of the present invention.

In the following detailed description, only the preferred embodiment has been shown and described, simply by way of illustration of the best mode contemplated by the inventors of carrying out the invention. As will be realized by an artisan of ordinary skill in the art, the invention may be modified into various adaptations, all without departing from the spirit of the invention. Accordingly, the drawings and description are to be regarded as illustrative in nature and not restrictive.

The present invention is implemented with a digital multimedia broadcasting (DMB) system as an example of digital broadcasting systems. A device and method for editing a channel list of a digital broadcasting system is explained with a DMB-capable portable terminal; however, the present invention is not limited to a portable phone, but can be implemented with electronic devices, supporting DMB service, such as cellular phones, Personal Communication Service (PCS) phones, dedicated DMB receivers, smart phones, International Mobile Telecommunication 2000 (IMT-2000) terminals, Universal Mobile Telecommunication Service (UMTS) terminals, laptop computers, personal computers, and the like.

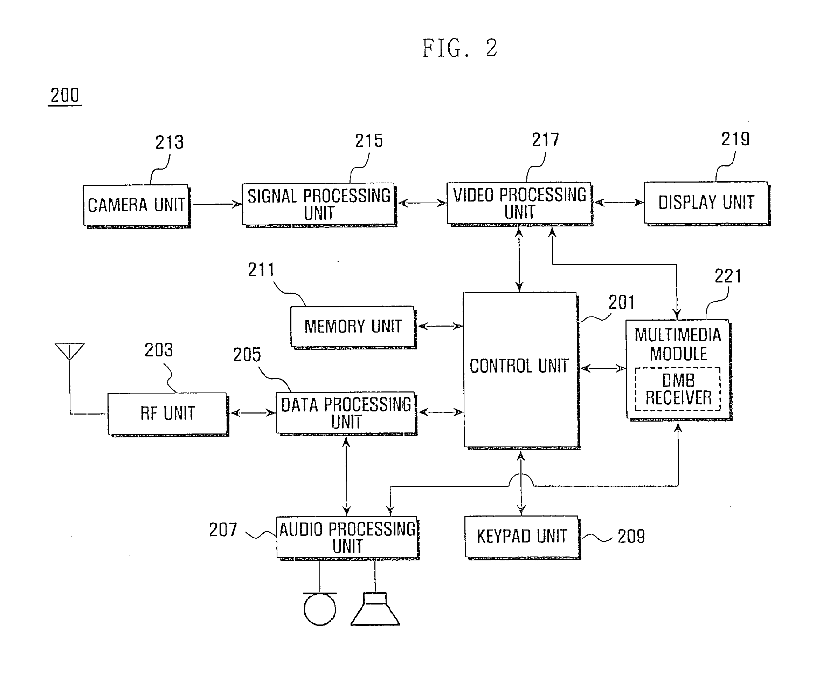

FIG. 2 is a block diagram illustrating a portable terminal according to the present invention.

Referring to FIG. 2, the portable terminal (200)includes an input part, a processing part, a storage part, and a communication part.

The input part includes an audio processing unit 207 for processing sound signals inputted through a microphone, a keypad unit 209 for generating key input signals, a camera unit 213 for taking a picture. A display unit 219 can be included in the input part if the display unit 219 is implemented with a liquid crystal display (LCD) having an overlaid touch screen. The input part interfaces to the external world through the input units.

The processing part includes a signal processing unit 215 for converting analog signals of the picture taken by the camera unit 213 into digital video signals, a video processing unit 217 for processing the digital video signals output from the signal processing unit and DMB video signals output from a multimedia module 221, a data processing unit 205 for processing audio signals output from the audio processing unit 207 and key input signals generated through the keypad unit 209, a control unit 201 for controlling overall operation of the portable terminal, and the multimedia module 221 for extracting video, audio, and text signals from received DMB signals. Preferably, the multimedia module 221 is provided with a connection interface (not shown) for forwarding the broadcasting data to an external display device such as a TV.

The multimedia module can be implemented as an independent DMB receiver. In this case, the multimedia module further includes an audio/video processing unit (not shown) for processing the broadcasting data so as to output the processed data as audio and video data and an output unit (not shown) for outputting the broadcasting programs, i.e., the video and audio programs, through a display and a speaker.

The processing part processes the signals preprocessed by the processing units.

The storage part includes a memory unit 211 for storing the user data input through the input part, DMB data output from the multimedia module 221, and application programs for supporting audio/video broadcasting services.

The output part includes a display unit 219 used both for data presentation and input, and an audio processing unit 207 for processing the audio signal. The output part outputs the audio and video signals.

The communication part includes a radio frequency (RF) unit 203 for exchanging data with other communication devices and web servers.

The RF processing unit 203 includes a RF transmitter for up-converting and amplifying signals to be transmitted and a low-noise RF receiver for amplifying and down-converting the received signals.

The data processing unit 205 performs decoding and demodulation on the signal to be transmitted through the RF processing unit 203 and demodulation and decoding on the signals received from the RF processing unit 203.

The audio processing unit 207 processes the audio signals from the data processing unit 205 and the multimedia module 221 so as to be replayed through the speaker and transfers the audio signals input through the microphone to the data processing unit 205.

The keypad unit 209 includes alphanumeric and character keys for inputting user data and function keys for operating various functions supported by the portable terminal.

The memory unit 211 includes a program memory and a data memory. The program memory stores the operating programs for controlling general operations of the portable terminal and an application program for supporting the DMB service. The data memory stores the data generated during the operations of the programs, parameter settings for operating the DMB service, and menu settings in a form of database. The database maps the applications and associated settings and parameters.

The control unit 201 controls overall operation of the portable terminal. Particularly, the control unit 201 controls switches between operation modes in accordance with key inputs through the keypad unit 209. For example, if a key input is performed for entering the DMB service mode while the portable terminal is in the voice communication mode, the control unit 201 switches from the voice communication mode to the DMB service mode. In addition, the control unit 201 presents information on the additional functions and user data associated with the DMB service according to additional key manipulation.

The additional functions include automatic channel switching and on/off functions in accordance with the program and channel information of the program items scheduled in the channel list.

The camera unit 213 takes a picture and converts analog video signals representing the picture into digital video signals by cooperating with an encoder (not shown). The digital video signals are processed by the signal processing unit 215 and output as image signals.

The video processing unit 217 generates presentation data from the output image signals of the signal processing unit 215. The video processing unit 217 processes the video and data signals (DMB signals) supplied through the multimedia module 221 in compatibility with the display unit 219 under the control of the control unit 201. In addition, the video processing unit 217 performs compression/decompression on the presentation data.

The display unit 219 displays the presentation data output from the video processing unit 217. In addition, the display unit 219 presents execution status images associated with the applications for providing the DMB service and the replaying programs under the control of the control unit 201.

The multimedia module 221 checks the type of DMB service requested by the user and provides the DMB service corresponding to the user requested DMB service type such as a video, audio, and data. The multimedia module 221 also processes a channel list provided by the DMB system and presents a user edited channel list.

The multimedia module 221 provides the user input data and application data associated with the DMB service to the video processing unit 219 and/or the audio processing unit 207.

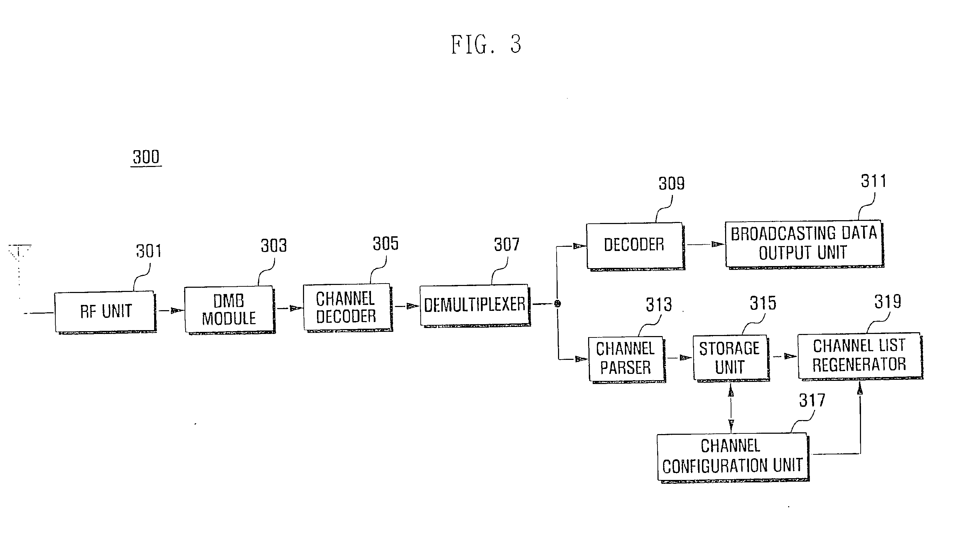

FIG. 3 is a block diagram illustrating the multimedia module of FIG. 2 in more detail. The multimedia module 221 of FIG. 2 includes a DMB receiver.

In this embodiment, while the DMB receiver is combined with a portable terminal, the present invention is not limited to the portable terminal combined with the DMB receiver, and the DMB receiver can be combined with other electronic devices having a display. Of course, the DMB receiver can be implemented only for receiving the DMB signals.

In case of the dedicated DMB receiver, a connection interface can be provided for connecting the DMB receiver to other devices such as the portable terminal. Also, the DMB receiver can have an input part and an output part as in the portable terminal combined with the DMB receiver.

Referring to FIG. 3, the DMB receiver (300) includes an RF unit 301, a DMB module 303, a channel decoder 305, a demultiplexer 307, a decoder 309, a broadcasting data output unit 311, an EPG parser 313, a storage unit 315, a channel configuration unit 317, and a channel list re-generator 319.

The RF unit 301 receives broadcasting signals, i.e., the DMB signals transmitted from a satellite DMB or terrestrial DMB center through an antenna. The DMB signals are multiplexed and transmitted whereby the RF unit 301 converts the DMB signals into baseband signals. The DMB signal includes at least one of video, audio, text, and other data signals provided by a plurality of contents providers.

The DMB module 303 performs demodulation on the baseband signals processed by the RF unit 301 so as to output transmission packets and extracts the DMB signals of the channel requested by the user.

The decoder 305 checks the transmission packets demodulated by the DMB module 303 and decodes an audio or video broadcasting program from the transmission packet. The Demultiplexer 307 demultiplexes the decoded program. The transmission packet can contain channel information, i.e., the EPG information. In case of the EPG information, the demultiplexer 307 bypasses the transmission packet.

The demultiplexer 307 de-multiplexes the transmission packets from the channel decoder 305 into the broadcasting program packets and information packets, feeding the decoder 309 and the EPG parser 313 respectively.

The decoder 309 receives the broadcasting program packets output from the demultiplexer 307 and decodes the broadcasting program packets with a decoding scheme corresponding to the encoding scheme used in the broadcasting center. The decoded broadcasting packets are fed into the broadcasting data output unit 311.

The broadcasting data output unit 311 outputs the broadcasting programs, e.g., the audio and video programs decoded by the decoder 309, through a predetermined output unit of the DMB receiver.

The EPG parser 313 receives the information packets demultiplexed by the demultiplexer 307 and extracts the broadcasting information, i.e., the EPG information. The EPG information is stored in the storage unit 315.

The storage unit 315 stores the broadcasting program information generated at the EPG parser 313 and checks that there is a key input for presenting the channel list through the user interface. If a key input for presenting the channel list is detected, the channel list is generated on the basis of the broadcasting program information stored in the storage unit 315. In addition, the storage unit 315 stores the channel list edited by the user and information on the channels.

The channel list re-generator 319 outputs the channel list stored in the storage unit 315 in accordance with a format set by the user.

The channel configuration unit 317 loads the channel list from the storage unit 315 and reorders the channel items of the channel list in a form requested by the user. That is, the channel configuration unit 317 checks a channel reordering format requested by the user, reorders the channel items of the channel list according to the channel reordering format, and sends the channel list to the storage unit 315 and the channel list re-generator 319.

The channel reordering format includes a frequency band based reordering format, a user selective reordering format for allowing the user to randomly change a display order of channel items, a favourite channel reordering format in which channels are ranked on the basis of historical information such as view counts, a virtual channel-based reordering format in which channels are mapped to virtual channels entitled by a user and sorted on the basis of titles of the virtual channels, and a keyword-based reordering format in which the channels including the keyword input by the user are presented.

Now, the operation of the above structured DMB receiver will be described with reference to the accompanying drawings.

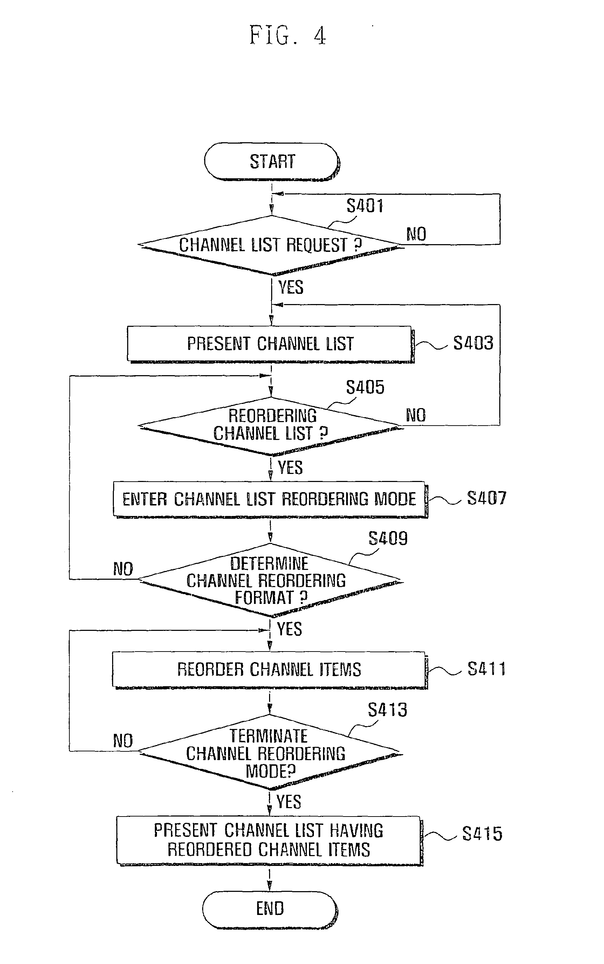

FIG. 4 is a flowchart illustrating a method for editing channel list of a digital broadcasting service according to the present invention.

Referring to FIG. 4, a DMB-capable portable terminal determines whether a key input for requesting a channel list presentation is performed at stepS401. If a key input for requesting a channel list presentation is performed, the portable terminal retrieves the channel list and presents the retrieved channel list in a channel list presentation screen at stepS403.

After presenting the channel list, the portable terminal determines whether key input for reordering channel items of the channel list has been detected at stepS405. If a key input for reordering the channel items of the channel list is detected, the portable terminal enters a channel list reordering mode at step S407.

The channel list reordering presentation can be displayed in a form of popup window overlaid on the channel list presentation screen or as a channel list reordering screen replacing the channel list presentation screen.

After entering the channel list reordering mode, the portable terminal determines whether a key input for selecting a channel reordering format is performed at stepS409. If a key input for selecting a channel reordering format is performed, the portable terminal reorders the channel items of the channel list according to the channel reordering format requested by the user at stepS411.

After reordering the channel list according to the requested channel reordering format, the portable terminal determines whether a key input for terminating the channel reordering mode has been detected at step S413. If no key input for terminating the channel reordering mode is sensed within a predetermined time interval, the portable terminal repeats step S405. If the input key for terminating the channel reordering mode is detected within a predetermined time, the portable terminal completes reordering the channel items of the channel list and then presents the channel list with the reordered channels at stepS415.

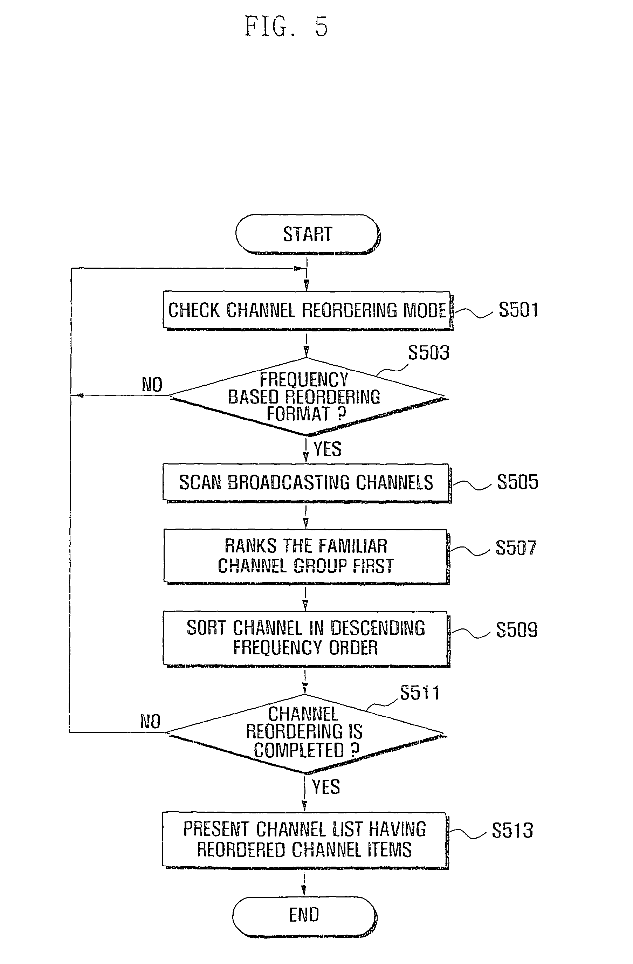

FIG. 5 is a flowchart illustrating a channel list reordering procedure with a frequency based reordering format according to the present invention.

Referring to FIG. 5, if it is determined that the portable terminal is in the channel reordering mode in step S501, the portable terminal determines whether a frequency based reordering format is requested at step S503.

If the frequency based reordering format is requested, the portable terminal scans broadcasting channels and classifies the scanned channels into a familiar channel group served by familiar terrestrial broadcasting content providers and an unfamiliar channel group served by dedicated digital content providers then lists the familiar channel group in an order of frequency band at step S505 and then ranks the familiar channel group first at step S507.

After listing the familiar channel group first, the portable terminal sorts the channel items of each group in a descending frequency order in stepS509.

After completing the arrangement of the channels, the portable terminal determines whether a key input for terminating the channel reordering mode is performed (S511). If no key input for terminating the channel reordering mode is detected within a predetermined time, the portable terminal repeats step S501. If however, a key input for terminating the channel reordering mode is detected, the portable terminal completes reordering the channel items of the channel list and then presents the channel list with the reordered channels at step S513.

Tables 2 and 3 are examples of channel lists that contain information on the broadcasting channels with Ensemble Label, Service Label, Frequency, and Content Provider.

**Table 2**

| Ensemble Label | Service Label | Frequency | Content Provider |
|---|---|---|---|
| 1. U1 DMB | U1 | 8A | U1 Media |
| 2. U1 DMB | KBS HEART | 8A | U1 Media |
| 3. YTN DMB | mYTN | 8B | YTN |
| 4. 1 to 1 | 1 to 1 | 8C | Korean DMB |
| . | . | . | . |
| . | . | . | . |
| . | . | . | . |
| 10. MBC DMB | myMBC | 12A | MBC |
| 11. U-KBS | KBS-STAR | 12B | KBS |
| 12. SBS DMB | SBS u TV | 12C | SBS |
| 13. SBS DMB | SBS u Data | 12C | SBS |
| . | . | . | . |
| . | . | . | . |
| . | . | . | . |

**Table 3**

| Ensemble Label | Service Label | Frequency | Content Provider |
|---|---|---|---|
| 1. SBS DMB | SBS u Data | 12C | SBS |
| 2. SBS DMB | SBS u TV | 12C | SBS |
| 3. U-KBS | KBS-STAR | 12B | KBS |
| 4. MBC DMB | myMBC | 12A | MBC |
| . | . | . | . |
| . | . | . | . |
| . | . | . | . |

Table 2 shows a typical channel list in which the channel items are sorted in an ascending frequency order without considering recognition levels of the content providers. In Table 3, however, the channel items are sorted in a descending order in consideration of the recognition levels of the content providers, such that the channel items of the familiar content providers are highly ranked in the channel list. By sorting the channels in consideration of familiarity, it is possible to enhance the user's convenience.

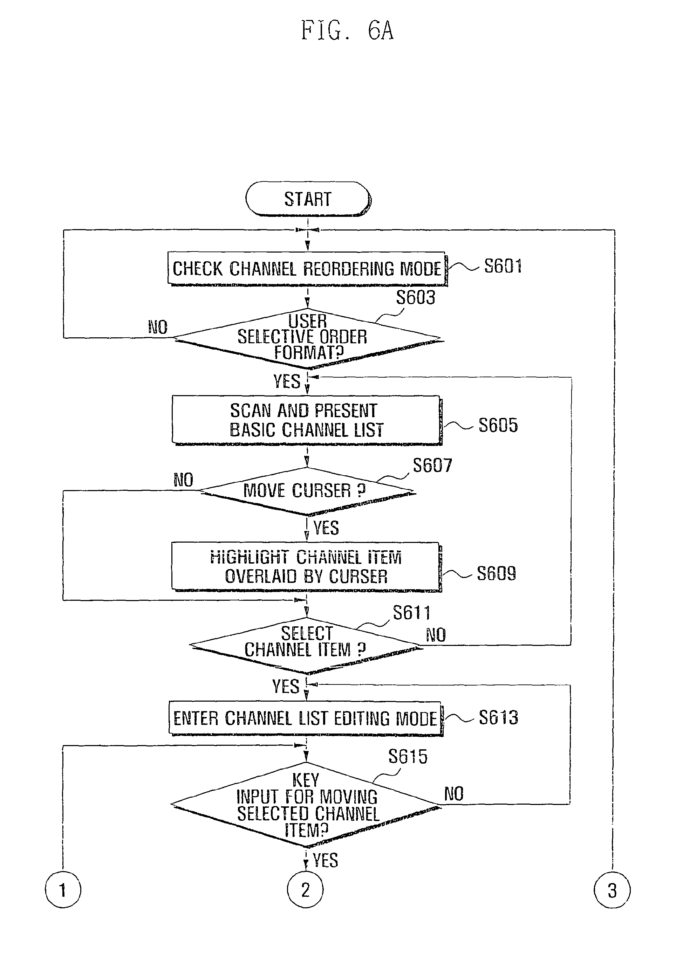

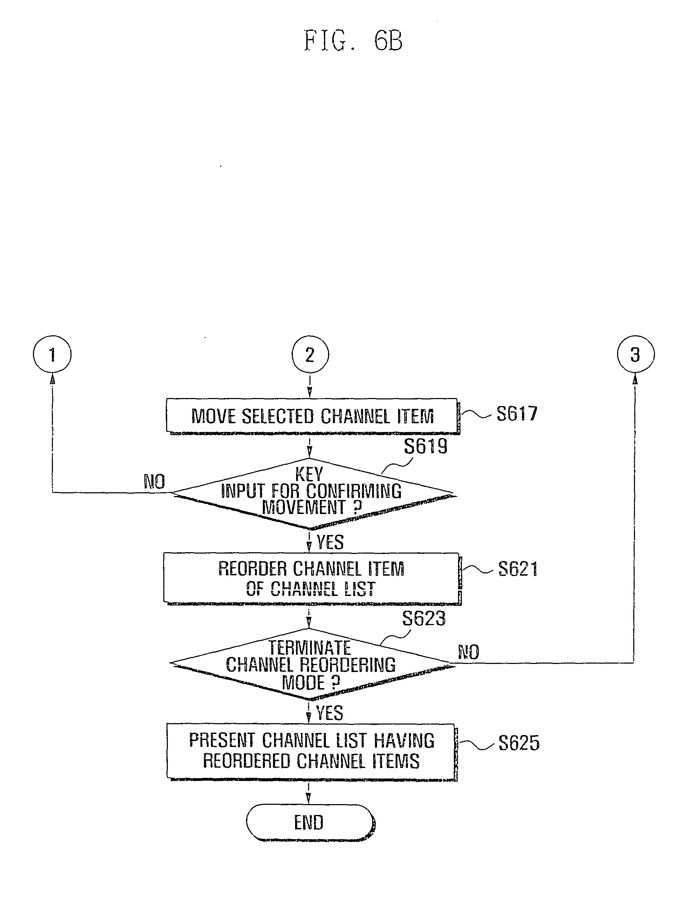

FIGs. 6A to 6B are flowcharts illustrating a channel list reordering procedure with a user selective order format according to the present invention.

Referring to FIG. 6A to 6B, if it is determined that the portable terminal is in the channel reordering mode in step S601, the portable terminal determines whether a user selective order format is requested in step S603.

If the user's selective order format is requested, the portable terminal scans broadcasting channels to create a basic channel list with the scanned channels (S605).

After creating the basic channel list, the portable terminal determines whether a key input for moving a cursor over the channel items of the basic channel at step S607has been detected. If the input key is detected, the portable terminal highlights the channel item on which the cursor is overlaid in step S609.

Next, the portable terminal determines whether a key input for selecting a channel item has been detected in step S611. If the input key is sensed, the portable terminal enters a channel list editing mode in step S613.

After entering the channel list editing mode, the portable terminal determines whether a key input for moving the selected channel item in stepS615is selected. Preferably, the movement of the channel item is performed by manipulations of direction keys.

If a key input for moving the selected channel item is detected, the portable terminal moves the channel item according to the direction indicated by said key in step S617.

After movement of the selected channel item, the portable terminal determines whether a key input for placing the moved channel item is detected in step S619. If so, the portable terminal puts the channel item at a place so as to reorder the channel items in the channel list in step S621.

After reordering the channel items, the portable terminal determines whether a key input for terminating the channel reordering mode is detected within a predetermined time in step S623. If no key input for terminating the channel reordering mode is active, the portable terminal repeats step S601. If an input key for terminating the channel reordering mode is sensed, the portable terminal completes reordering the channel items and then presents the channel list with the reordered channels in step S625.

In this manner, the channel list can be edited by the user.

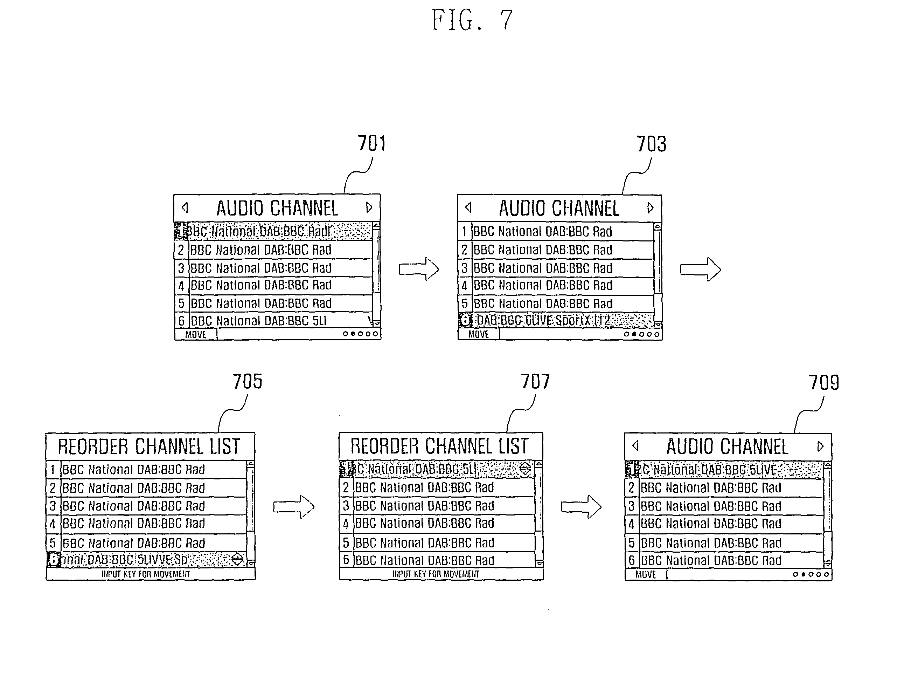

FIG. 7 shows example screen images for explaining a user selective order format-based channel list reordering procedure of FIG. 6A to 6B.

As shown in FIG. 7, upon entering the channel list reordering mode, the portable terminal scans broadcasting channels and arranges the scanned channels in a channel list. Initially, a cursor is located on a first channel of the channel list as in a screen image 701.

The cursor is moved onto a target channel item in accordance with user's key manipulation. In a screen image 703, the cursor is moved to be on the target channel item of number 6.

If a key input for selecting the channel item is detected while the cursor stays on the target channel, the portable terminal enters a channel reordering mode as in a screen image 705.

After entering the channel reordering mode, the portable terminal checks a key input for moving the channel item. The movement of the channel item is performed with direction keys or volume keys. By manipulating the direction keys the selected channel item is moved to a target position of the channel list as in a screen image 707.

After locating the channel item at a target position, the channel item is fixed at the target position in accordance with a key input confirming the position as in a screen image 709.

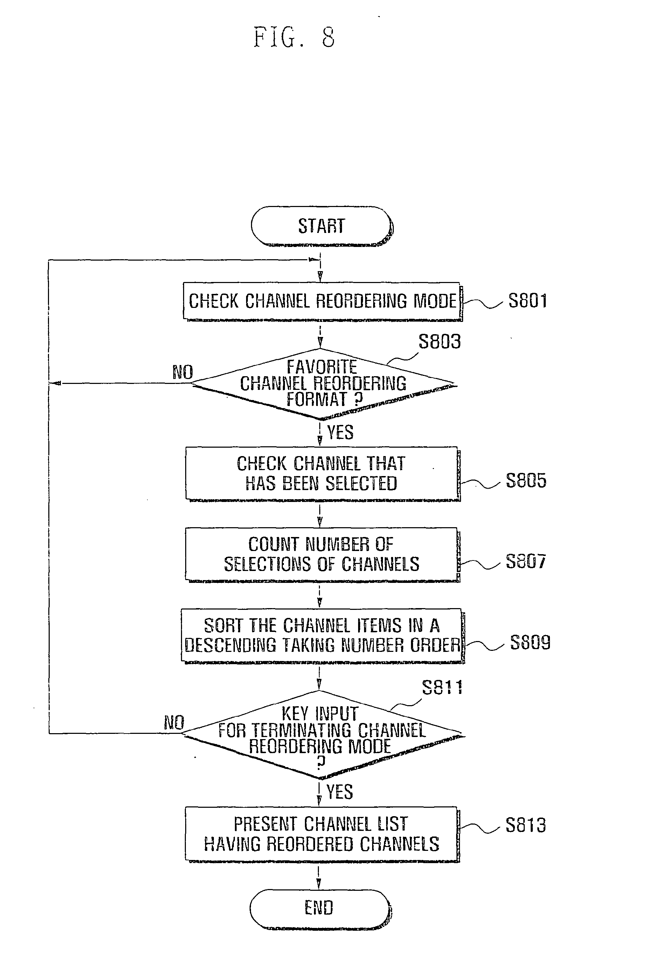

FIG. 8 is a flowchart illustrating a channel list reordering procedure with a favorite channel reordering format according to the present invention.

Referring to FIG. 8, if it is determined that the portable terminal is in the channel reordering mode in step S801, the portable terminal determines whether a key input requesting a favorite channel reordering format is detected in stepS803. If so, the portable terminal checks the channels that are selected at least one time at step S805 and counts the number of selections of each channel in step S807. Sequentially, the portable terminal reorders the channel items of the channel list on the basis of the number of selections such that the channel is sorted in a descending selected-number order at step 809. In order to count the number of selections of each channel, the portable terminal monitors the changes and occupancy times of channels and stores the changes and occupancy times of channels as history information.

After reordering the channels on the basis of the number of the channel selections, the portable terminal determines whether a key input for terminating the channel reordering mode is detected in step S811. If no key is detected within a predetermined time, the portable terminal repeats step S801. If on the other hand a key input is sensed, the portable terminal completes reordering the channel items of the channel list and then presents the channel list with the reordered channels in step S813.

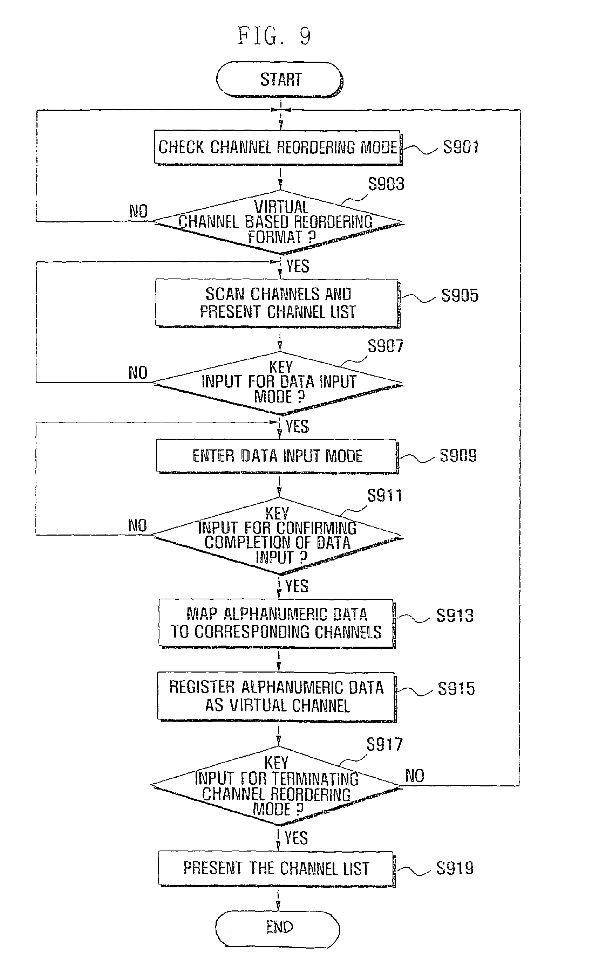

FIG. 9 is a flowchart illustrating a channel list reordering procedure with a favorite channel reordering format according to the present invention

Referring to FIG. 9, if it is determined that the portable terminal is in the channel reordering mode in step S901, the portable terminal determines whether a virtual channel based reordering format is requested in stepS903.

If the virtual channel based reordering format is requested, the portable terminal scans channels and forms a channel list with the scanned channels in stepS905.

After forming the channel list, the portable terminal determines whether a key input for entering a data input mode is detected in stepS907. If so, the portable terminal goes into a data input mode in step S909. In that mode, the portable terminal allows the user to input alphanumeric data for the corresponding channel item. Next, the portable terminal determines whether a key input for confirming completion of the alphanumeric data input is detected in stepS911. If so, the portable terminal maps the alphanumeric data to the corresponding channel in step S913 and registers the alphanumeric data as a virtual channel of the corresponding channel at step S915. After all the channels are entitled and mapped to virtual channel names, the channels are sorted on the basis of the virtual channel names.

After sorting the channel items on the basis of the virtual channel names, the portable terminal determines whether a key input for terminating the channel reordering mode is detected within a predetermined time at step S917. If no key input for terminating the channel reordering mode is detected, the portable terminal repeats step S901. If the key inputs detected, the portable terminal completes reordering the channel items and presents the channel list with the reordered channels at step S919.

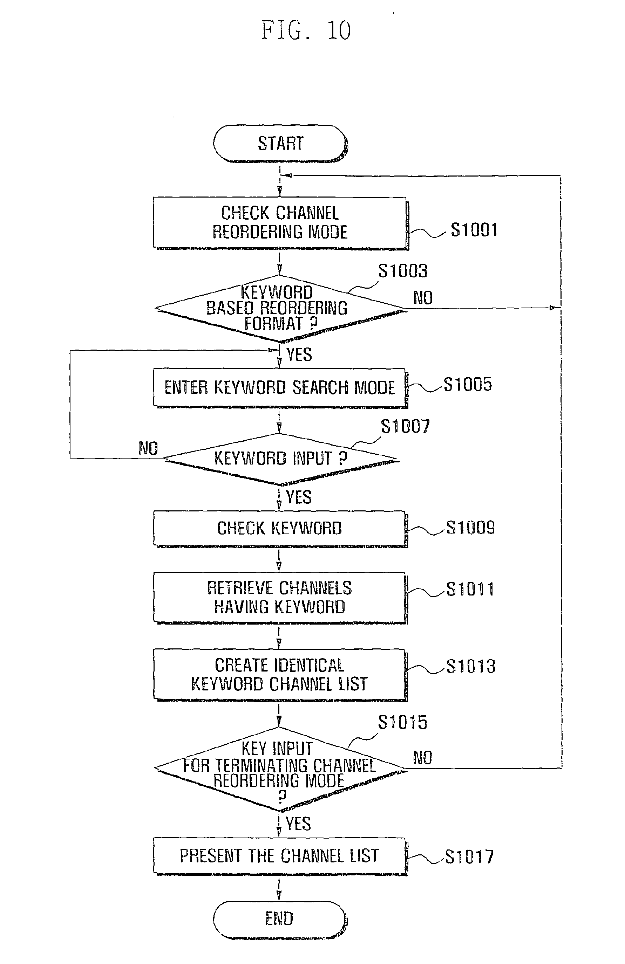

FIG. 10 is a flowchart illustrating a channel list reordering procedure with a keyword-based reordering format according to the present invention.

Referring to FIG. 10, if it is determined that the portable terminal is in the channel reordering mode in step S1001, the portable terminal determines whether a keyword-based reordering format is requested in step S1003.

If the keyword-based reordering format is requested, the portable terminal scans channels, forms a channel list with the scanned channels, and enters a keyword search mode at step S1005.

After entering the keyword search mode, the portable terminal determines the entry of a keyword in step S1007. If such is detected, the portable terminal checks the keyword in step S1009 and retrieves channels having the keyword in step S1011. After retrieving the channels having the keyword, the portable terminal creates an identical keyword channel list at step S1013.

After creating the identical keyword channel list, the portable terminal determines whether a key input for terminating the channel reordering mode is detected within a predetermined time in step S 1015. If no key input is sensed, the portable terminal repeats step S1001. If a key input is detected, the portable terminal completes reordering the channel items and presents the channel list with the reordered channels at step S1017.

In the above exemplary embodiments, the channel list editing method is described with DMB service; however, the present invention is not limited to the channel list of the DMB service, but can be implemented with various broadcasting systems providing channel lists.

In addition, the channel list editing method of the present invention can be implemented with an individual reordering format or by combining at least two of the reordering formats described above. For example, the channel list editing method of the present invention can be implemented by combining the channel list reordering procedures of FIG. 6A to 6B and FIG. 8. That is, the channel list can be edited such that a favorite channel list is formed initially according to the procedure of FIG. 8 and then the channels of the favorite channel list are reordered by user manipulation.

As described above, the channel list editing device and method of the present invention allows the user to edit the channel list, resulting in improved user convenience. In addition, the channel list editing device and method of the present invention allow customizing a channel list for a user's convenience. Further, since the channel list editing device and method of the present invention allow reordering the channel items of the channel list in a familiar order, the user can easily obtain the channel information, minimizing key manipulation burden.

Although exemplary embodiments of the present invention have been described in detail hereinabove, it should be clearly understood by an artisan of ordinary in the art that many variations and/or modifications of the basic inventive concepts herein taught may fall within the spirit and scope of the present invention, as further defined by the appended claims.

## Claims

1. A method for editing a channel list having a plurality of channel items comprising:
presenting the channel list if an edit request is input;
extracting an editing format from the edit request;
reordering the channel items according to the editing format; and
re-presenting the channel list having the reordered channel items.

2. The method of claim 1, wherein presenting the channel list comprises:
providing a channel list presentation window if the edit request is input; and
changing the channel list presentation window into a channel list editing window.

3. The method of claim 1, wherein the editing format comprises:
a frequency band-based reordering format for sorting the channel items in a descending frequency band order;
a user selective reordering format for changing positions of the channel items in accordance with a user's intention;
a favourite channel reordering format for sorting the channel items in the user's preference order;
a virtual channel based reordering format for sorting the channel items on the basis of virtual channel names mapped to the channels; and
a keyword based reordering format for extracting and arranging the channel items having a keyword input by a user.

4. The method of claim 1, wherein reordering the channel items according to the editing format comprises:
determining whether the editing format is a frequency band-based reordering format;
retrieving terrestrial broadcasting channel items from the channel items if the editing format is the frequency band-based reordering format;
ranking the terrestrial broadcasting channel items at high order positions of the channel list; and
sorting the terrestrial broadcasting channel items in a predetermined order.

5. The method of claim 1, wherein reordering the channel items according to the editing format comprises:
determining whether the editing format is a user selective reordering format;
selecting a channel item of the channel list according to a selection key input;
moving the selected channel item to a target position according to a movement key input; and
fixing the channel item to the target position according to a position confirmation key input.

6. The method of claim 1, wherein reordering the channel items according to the editing format comprises:
determining whether the editing format is a favorite channel reordering format;
retrieving channel items which have been selected at least one time;
counting a number of selections of the channel items;
sorting the channels in a descending order of the counted number.

7. The method of claim 6, wherein counting a number of selections is performed by referring a previously stored channel selection history, the channel selection history being monitored and stored according to an initial configuration.

8. The method of claim 1, wherein reordering the channel items according to the editing format comprises:
determining whether the editing format is a virtual channel based reordering format;
selecting a channel item of the channel list according to a selection key input, if the editing format is the virtual channel based reordering format;
mapping, if alphanumeric data are input, the alphanumeric data to the selected channel item as a virtual channel; and
sorting the channel items in a predetermined order of the virtual channels.

9. The method of claim 8, wherein reordering the channel items according to the editing format further comprises:
entering an input mode for receiving the alphanumeric data; and
waiting for the alphanumeric data to be input.

10. The method of claim 1, wherein reordering the channel items according to the editing format comprises:
determining whether the editing format is a keyword based reordering format;
retrieving, if the editing format is a keyword based reordering format and a keyword is input, the channel items having the keyword; and
modifying the channel list to have the retrieved channel items.

11. The method of claim 10, wherein reordering the channel items according to the editing format further comprises:
entering a data input mode for allowing the keyword to be input; and
waiting the keyword to be input.

12. A device for editing a channel list having a plurality of channel items provided for a digital broadcasting service, comprising:
a memory for storing applications, data generated during operations of the applications, and a channel list and parameters and settings associated with the applications;
a controller for controlling the operations of the applications and presentations of the channel list and status of editing channel list; and
a multimedia module for providing editing formats for reordering the channel items of the channel list.

13. The device of claim 12, wherein the program module providing digital multimedia broadcasting service comprises:
providing at least one of audio/video information, channel information and
broadcasting data information provided in digital multimedia broadcasting service in response to a information input through DBM service;
providing a broadcasting channel list in response to a request for broadcasting channel list;
converting to channel list editing mode in response to a channel list editing request;
checking the channel list editing mode requested by a user; and
displaying the channel list by reordering in response to the checked editing mode of the channel list.

14. The device of claim 12, further comprising:
a display unit for displaying contents provided by the digital broadcasting service, execution status of the applications, presentations of channel list and channel list editing status.

15. The device of claim 12, wherein the multimedia module includes:
a demultiplexer for processing received transmission packets so as to separate data packets and control packets;
a channel parser for parsing the control packets so as to obtain the channel list from the control packets;
a storage unit for storing the channel list;
a channel list re-generator for processing the channel list so as to output a channel list modified according to an editing format;
a channel configuration unit for loading the channel list from the storage unit and reordering channel items of the channel list, reflecting a user's intent.

16. The device of claim 15, wherein the multimedia module further includes:
a digital broadcasting receiver for performing demodulation on radio signals so as to output the transmission packets;
a channel decoder for checking headers of the transmission packets to distinguish the data packets and the control packets and forwarding only the data packets to the demultiplexer, the control packets bypassing the demultiplexer.

17. The device of claim 15, wherein the channel configuration unit checks the editing format requested by the user, reorders the channel items of the channel list according to the editing format, and transfers the modified channel list to the channel list re-generator.

18. The device of claim 15, wherein the editing format includes:
a frequency band-based reordering format for sorting the channel items in a descending frequency band order;
a user selective reordering format for changing positions of the channel items in accordance with the user's intent;
a favourite channel reordering format for sorting the channel items in the user's preference order;
a virtual channel based reordering format for sorting the channel items on the basis of virtual channel names mapped to the channels; and
a keyword based reordering format for extracting and arranging the channel items having a keyword input by a user.

19. A device for editing a channel list having a plurality of channel items provided for a digital broadcasting service, comprising:
a demultiplexer for de-multiplexing received transmission packets into data packets and control packets;
a channel parser for parsing the control packets to obtain the channel list;
a storage unit for storing the channel list; and
a channel configuration unit for loading the channel list from the storage unit and modifying the channel list according to an editing format requested by a user.

20. The device of claim 19, wherein the channel configuration unit checks the editing format requested by the user and reorders channel items of the channel list, the channel list having the reordered channel items being stored in the storage unit and provided to a channel list re-generator.

21. The device of claim 19, wherein the editing format includes:
a frequency band-based reordering format for sorting the channel items in a descending frequency band order;
a user selective reordering format for changing positions of the channel items in accordance with the user's intent;
a favourite channel reordering format for sorting the channel items in the user's preference order;
a virtual channel based reordering format for sorting the channel items on the basis of virtual channel names mapped to the channels;
and a keyword based reordering format for extracting and arranging the channel items having a keyword input by the user.
